# EUROPÄISCHE PATENTSCHRIFT

(11) **EP 3 939 842 B1**
(45) Veröffentlichungstag und Bekanntmachung des Hinweises auf die Patenterteilung: **17.01.2024**
(21) Anmeldenummer: 21178763.5
(22) Anmeldetag: 10.06.2021
(51) Int. Cl.: B60T 8/172, B60T 8/175, B60T 8/1761

(54) **VERFAHREN ZUM DETEKTIEREN EINES DURCHDREHENS EINES RADES EINES FAHRZEUGES**
METHOD FOR DETECTING THE SPINNING OF A WHEEL OF A VEHICLE
PROCÉDÉ DE DÉTECTION D'UNE MISE EN MARCHE D'UNE ROUE D'UN VÉHICULE

(30) Priorität: 13.07.2020 DE 102020208741
(43) Veröffentlichungstag der Anmeldung: 19.01.2022
(73) Patentinhaber: VOLKSWAGEN AG, 38440 Wolfsburg (DE)
(72) Erfinder: Jaensch, Martin, 38239 Salzgitter (DE); Has, Razvan-Cristian, 80798 München (DE); Kemper, Sebastian, 38118 Braunschweig (DE)

(56) Entgegenhaltungen:
- DE-A1- 3 430 098
- DE-A1-102014 225 634
- KR-A- 20030 047 165
- US-A- 5 102 203

## Beschreibung

Die Erfindung betrifft ein Verfahren zum Detektieren eines Durchdrehens eines Rades eines Fahrzeuges, d. h. eines Überganges eines Reifens des Rades aus der Haftreibung in die Gleitreibung auf einer Fahrbahn, nach dem unabhängigen Verfahrensanspruch. Zudem betrifft die Erfindung ein entsprechendes Assistenzsystem für ein Fahrzeug.

Aus dem Stand der Technik sind Verfahren bekannt, die sich mit der Ermittlung von maximal absetzbaren Antriebsmomenten von Fahrzeugrädern beschäftigen. Die Druckschrift DE 10 2016 203 545 A1 setzt hierzu eine Schätzung des Umfangsschlupfs voraus, was bei Allradfahrzeugen nicht immer möglich ist. Des Weiteren kann der in dieser Druckschrift gezeigte Ansatz nur in quasistationären Fahrzuständen eine zuverlässige Reibwertschätzung generieren.

In der Druckschrift DE 10 2018 200 180 A1 wird zur Bestimmung des maximalen Rad-Fahrbahn-Reibwerts ein Eingriff in die Radlängskräfte und/oder Radaufstandskräfte benötigt. Der Eingriff auf einem Rad bzw. auf einer Achse wird mit einem entgegengesetzten Eingriff auf ein anderes Rad bzw. auf eine andere Achse kompensiert, mit dem Ziel, dass der Fahrer möglichst kein unerwartetes Fahrverhalten wahrnehmen soll. Eine ruckfreie, synchrone und gleichgroße Antriebsmomenterhöhung und Bremsmomentaufbau stellt sich allerdings sehr aufwändig dar. Des Weiteren wird für den in dieser Druckschrift vorgeschlagenen Ansatz ein konstanter Fahrzustand bei höheren Geschwindigkeiten benötigt. Nur in diesem Zustand erreichen die Einflüsse des Eingriffs messbare Amplituden und können von anderen Effekten entkoppelt werden, um daraus eine zuverlässige Reibwertschätzung zu erzielen. Dies beschränkt diesen Ansatz auf ausschließlich gerade Strecken und höhere Geschwindigkeiten.

In der Druckschrift DE 10 2016 214 065 A1 wird zur Bestimmung des maximalen Rad-Fahrbahn-Reibwerts aus einem gemessenen Arbeitspunkt, bestehend aus einem momentanen Radschlupf und Kraftschlussbeiwert, das Maximum extrapoliert. Bei diesem Ansatz werden bestimmte Annahmen getroffen, wie z.B. der Wert des kritischen Schlupfs sowie der Verlauf der Reibbeiwert-Schlupf-Kennlinie, die allerdings nur für bestimmte Reifen-Fahrbahn-Kombinationen gelten. Es ist weitgehend bekannt, dass, je nach Reifentyp, der kritische Schlupf zwischen 5% und 20% variieren kann. Des Weiteren ist es allgemein bekannt, dass die Reibbeiwert-Schlupf-Kennlinie auf frischem Schnee kein stark ausgeprägtes Maximum aufweist, wie in diesem Ansatz angenommen. Aus diesem Grund kann keine genaue Schätzung des maximalen Rad-Fahrbahn-Reibwerts erzielt werden, sobald hohe Modellabweichungen vorliegen. Die erzielte Genauigkeit des Ansatzes ist weiterhin stark von der Genauigkeit der Schlupfmessung beeinflusst. Dies nimmt für Allradfahrzeuge stark ab, sobald alle Räder zum Antrieb eingesetzt werden.

Ein weiteres bekanntes Verfahren ist in der DE 34 30 098 A1 gezeigt.

Der Erfindung liegt daher die Aufgabe zugrunde, ein schnelles und zuverlässiges Verfahren zum Detektieren eines Durchdrehens eines Rades eines Fahrzeuges, d. h. eines Überganges eines Reifens des Rades aus der Haftreibung in die Gleitreibung auf einer Fahrbahn, bereitzustellen, welches von einer Messung und/oder Schätzung eines Schlupfs des Rades sowie eines Reibwertes zwischen dem Rad und einer Fahrbahn entkoppelt ist. Ferner liegt der Erfindung die Aufgabe zugrunde, ein Verfahren zum Detektieren eines Durchdrehens eines Rades eines Fahrzeuges zu schaffen, welches mit messbaren Größen arbeitet und eine unmittelbare, schätzungsfreie Erkennung eines Durchdrehens und sogar einer Durchdrehtendenz des Rades ermöglicht. Zudem ist es die Aufgabe der Erfindung, eine verbesserte Erkenntnis über das Verhalten des Rades auf der Fahrbahn zu erzielen, die nicht nur einen Übergang des Reifens des Rades aus der Haftreibung in die Gleitreibung, sondern auch ein Stabilisieren des Rades zuverlässig und schnell erkennen kann. Darüber hinaus ist es Aufgabe der Erfindung, eine zuverlässige Bestimmung einer maximal übertragbaren Längskraft durch das Rad auf die Fahrbahn, sog. Umfangskraft, sowie eines Reibwertes zwischen einem Reifen des Rads und der Fahrbahn zu ermöglichen. Außerdem ist es die Aufgabe der Erfindung, verbesserte Antiblockiersysteme sowie Schlupfregelsysteme bereitzustellen, die ebenfalls als ABS- und ASR-Systeme bezeichnet werden können.

Die erfindungsgemäße Aufgabe wird gelöst durch ein Verfahren zum Detektieren eines Durchdrehens eines Rades eines Fahrzeuges, d. h. eines Überganges eines Reifens des Rades aus der Haftreibung in die Gleitreibung auf einer Fahrbahn, mit den Merkmalen des unabhängigen Verfahrensanspruches, insbesondere aus dem kennzeichnenden Teil. Zudem wird die erfindungsgemäße Aufgabe gelöst durch ein entsprechendes Assistenzsystem für ein Fahrzeug. Dabei gelten Merkmale, die im Zusammenhang mit einzelnen Ausführungsformen beschrieben sind, selbstverständlich auch im Zusammenhang mit den anderen Ausführungsformen und jeweils umgekehrt, sodass bezüglich der Offenbarung zu den einzelnen Ausführungsformen stets wechselseitig Bezug genommen wird bzw. werden kann.

Die Erfindung stellt ein Verfahren bereit, welches zum Detektieren eines Durchdrehens eines Rades eines Fahrzeuges, d. h. eines Überganges eines Reifens des Rades aus der Haftreibung in die Gleitreibung auf einer Fahrbahn, insbesondere unabhängig von einer Messung und/oder Schätzung eines Schlupfs eines Reifens des Rades und/oder eines Reibwerts zwischen dem Reifen des Rades und der Fahrbahn, dient. Dem Rad ist dabei mindestens ein Drehzahlsensor zugeordnet. Das Verfahren wird mithilfe einer Steuereinheit des Fahrzeuges durchgeführt und weist folgende Schritte auf:
1) Erfassen einer Drehgeschwindigkeit des Rades durch den mindestens einen Drehzahlsensor,
2a) Erzeugen eines ersten Signals für eine Drehbeschleunigung des Rades durch die Steuereinheit,
   wobei die Drehbeschleunigung des Rades in Abhängigkeit von der erfassten Drehgeschwindigkeit bestimmt bzw. berechnet wird,
2b) Erzeugen eines zweiten Signals für einen Drehruck des Rades durch die Steuereinheit, wobei der Drehruck des Rades in Abhängigkeit von der bestimmten Drehbeschleunigung ermittelt bzw. berechnet wird,
3a) Überwachen des ersten Signals auf Überschreiten eines ersten Schwellenwertes,
3b) Überwachen des zweiten Signals auf Überschreiten eines zweiten Schwellenwertes,
4) Erzeugen eines positiven Detektionssignals durch die Steuereinheit, dass das Durchdrehen des Rades erkannt wurde,
   wenn der erste Schwellenwert durch das erste Signal und der zweite Schwellenwert durch das zweite Signal überschritten wurden.

Der Drehzahlsensor im Sinne der Erfindung kann durch unterschiedliche Technologien bereitgestellt werden, die zur Winkelmessung und/oder Drehzahlmessung geeignet sind, wie z. B. Inkrementalgeber, Potentiometer, Gyroskop usw.

Die Drehgeschwindigkeit im Sinne der Erfindung kann auch als eine Winkelgeschwindigkeit oder eine Rotationsgeschwindigkeit bezeichnet werden. Die Drehbeschleunigung im Sinne der Erfindung kann als eine Ableitung der Drehgeschwindigkeit nach der Zeit berechnet werden. Der Drehruck im Sinne der Erfindung kann als eine Ableitung der Drehbeschleunigung nach der Zeit berechnet werden.

Die Schwellenwerte für das Drehbeschleunigungs-Signal und das Drehruck-Signal können empirisch und/oder theoretisch bestimmt werden. Die Schwellenwerte können bspw. in Abhängigkeit von maximal übertragbaren Längskräften des konkreten Fahrzeuges festgelegt werden.

Die Erfindung schlägt somit ein neuartiges Verfahren zur Erkennung des Durchdrehens eines Rades vor. Damit ist der genaue Zeitpunkt gemeint, zu dem eine vollständige Ausnutzung des Kraftschlusspotentials des Rades vorliegt und eine ruckartige Beschleunigung des Rades stattfindet. Dies wird durch das Einführen neuartiger Raddynamikmerkmale ermöglicht. Diese Raddynamikmerkmale basieren insbesondere auf der Drehbeschleunigung und dem Drehruck des Rads und umfassen vorzugsweise die Flächen unterhalb der beiden Signale. Auf Basis der Raddrehbeschleunigung und des Raddrehruckes können im Rahmen der Erfindung vier Signale generiert werden: zum einen die Signale für die Drehbeschleunigung und den Drehruck selbst und umfassen zwei weitere Signale für die Flächen unter dem Verlauf der ersten beiden Signale.

Für die jeweiligen Signale werden einzelne Schwellenwerte definiert. Wenn die einzelnen Signale über die entsprechenden Schwellenwerte steigen, werden sog. Bedingungen quittiert (oder mit anderen Worten vermerkt bzw. notiert), dass das jeweilige Signal den zugeordneten Schwellenwert überschritten hat. Das Quittieren der ersten beiden Bedingungen für die Signale der Drehbeschleunigung und des Drehrucks kann vorteilhafterweise, selbst nach Unterschreiten der definierten Schwellenwerte, bspw. für 10 ms, erhalten bleiben. Sobald alle Bedingungen gleichzeitig vorliegen, kann ein Durchdrehen des Rades mit einer hohen Zuverlässigkeit erkannt werden.

Die Raddrehbeschleunigung und der Raddrehruck liegen zumeist nicht als Messwerte vor. Die Raddrehbeschleunigung und der Raddrehruck sowie die Raddrehgeschwindigkeit können im Rahmen der Erfindung mithilfe eines regelungstechnischen Beobachters, bspw. eines Luenberger-Beobachters, auf Basis des Raddrehgeschwindigkeitssignals rekonstruiert werden. Die Drehgeschwindigkeit wird hierzu am Rad gemessen und als Raddrehgeschwindigkeitssignal der Steuereinheit übermittelt. Diese Implementierung ermöglicht eine schnelle und zuverlässige Rekonstruktion der Raddrehbeschleunigung und des Raddrehrucks mit einer geringen Phasenverschiebung, mit einer hohen Robustheit gegen Signalrauschen sowie fehlende CAN-Nachrichten, die das Raddrehgeschwindigkeitssignal übermitteln sollen.

Die Erfindung ermöglicht ferner eine Erkennung des Durchdrehens des Rades mit einem minimalen Zeitverzug, insbesondere von weniger als 20 ms. Auf Basis dieser Information können vorteilhafterweise weitere Eigenschaften des Radverhaltens extrahiert werden. Mit der Annahme, dass das wirkende Radantriebsmoment und/oder das Radbremsmoment zum Zeitpunkt des Durchdrehens oder des Blockierens als Signal vorliegen, bietet die Erfindung die Möglichkeit an, die maximal übertragbaren Reifenlängskräfte, bspw. mithilfe des Drallsatzes des Rades, zu bestimmen, insbesondere einfach zu berechnen. Weiterhin kann eine zuverlässige Bestimmung eines entsprechenden maximalen Rad-Fahrbahn-Reibwerts durchgeführt werden. Dabei können die aktuelle Radaufstandskraft sowie Radquerkraft berücksichtigt werden.

Das erfindungsgemäße Verfahren kann für jedes Fahrzeugrad einzeln durchgeführt werden. Die Schritte des erfindungsgemäßen Verfahrens können in der vorgegebenen oder in einer abgeänderten Reihenfolge durchgeführt werden. Vorteilhafterweise können die Schritte des erfindungsgemäßen Verfahrens simultan und/oder wiederholend durchgeführt werden, um einen fließenden Prozess zu ermöglichen.

Des Weiteren bietet die Erfindung die Möglichkeit, auf Basis der eingeführten Signale, die die erfindungsgemäßen neuartigen Raddynamikmerkmalen umfassen, ein Stabilisieren eines Rades zu erkennen. Mithilfe des erfindungsgemäßen Verfahrens können auf diese Weise verbesserte, raddynamikbasierte Blockierschutzregelsysteme bzw. Antiblockiersysteme sowie Schlupfregelsysteme bereitgestellt werden.

Ferner kann die Erfindung bei einem Verfahren zum Detektieren eines Durchdrehens eines Rades eines Fahrzeuges vorsehen, dass das Verfahren mindestens einen weiteren von den folgenden Schritten aufweist:
2c) Erzeugen eines dritten Signals für einen Flächeninhalt unterhalb des ersten Signals durch die Steuereinheit,
2d) Erzeugen eines vierten Signals für einen Flächeninhalt unterhalb des zweiten Signals durch die Steuereinheit,
3c) Überwachen des dritten Signals auf Überschreiten eines dritten Schwellenwertes,
3d) Überwachen des vierten Signals auf Überschreiten eines vierten Schwellenwertes, wobei im Schritt 4) ein positives Detektionssignal erzeugt wird, dass ein Durchdrehen des Rades erkannt wurde, wenn der erste Schwellenwert durch das erste Signal, der zweite Schwellenwert durch das zweite Signal, der dritte Schwellenwert durch das dritte Signal und der vierte Schwellenwert durch das vierte Signal überschritten wurden.

Die vier Signale bezeichnen den Radzustand, der das dynamische Verhalten des Rades wiedergibt. Im stabilen Bereich der Räder erreichen diese Signale nur geringfügige Werte. Ein instabiles Verhalten charakterisiert sich durch hohe Werte dieser Zustände. Beim Durchdrehen des Rades wird erwartet, dass alle vier Signale die zugehörigen Schwellenwerte überschreiten. Auf diese Weise kann die Robustheit der Detektion wesentlich erhöht werden und die Falsch-Erkennungen vermieden werden. In der Praxis hat sich erwiesen, dass die einzelnen Überschreitungen der Schwellenwerte durch andere Vorgänge, wie z. B. schnelles Lenken, Lastwechsel usw., aktiviert werden können, die ja gerade zu keiner positiven Detektion eines Durchdrehens des Rades führen sollen. Durch Quittieren von allen vier Überschreitungen kann sichergestellt werden, dass das tatsächliche Durchdrehen des Rades von den anderen Vorgängen unterschieden werden kann.

Weiterhin sieht die Erfindung bei einem Verfahren zum Detektieren eines Durchdrehens eines Rades eines Fahrzeuges vor, dass das erste Signal und das zweite Signal mithilfe eines Luenberger-Beobachters in Abhängigkeit eines Drehgeschwindigkeitssignals rekonstruiert werden. Auf diese Weise kann ein vorteilhaftes Regelverfahren genutzt werden, um aus einem Signal für die Drehgeschwindigkeit des Rades, welche geschätzt und/oder gemessen werden kann, die Drehbeschleunigung und den Drehruck zu rekonstruieren. Hierzu wird vorteilhafterweise nur eine Messung und/oder Schätzung der Drehgeschwindigkeit des Rades benötigt, die vorteilhafterweise von einer Messung und/oder Schätzung des Schlupfs des Reifens des Rades und/oder des Reibwerts zwischen dem Reifen des Rades und der Fahrbahn völlig unabhängig ist. Dies kann die Plausibilität und Anwendbarkeit des erfindungsgemäßen Verfahrens auf eine vorteilhafte Weise erhöhen bzw. erweitern.

Vorteilhafterweise kann die Erfindung vorsehen, dass beim Überschreiten des ersten Schwellenwertes durch das erste Signal eine erste Bedingung quittiert wird, und/oder dass beim Überschreiten des zweiten Schwellenwertes durch das zweite Signal eine zweite Bedingung quittiert wird, und/oder dass beim Überschreiten des dritten Schwellenwertes durch das dritte Signal eine dritte Bedingung quittiert wird, und/oder dass beim Überschreiten des vierten Schwellenwertes durch das vierte Signal eine vierte Bedingung quittiert wird. Die jeweilige Bedingung kann als eine logische "1" dargestellt werden, die beim Überschreiten eines bestimmten Schwellenwertes durch das korrespondierende Signal vorgemerkt wird. Wenn alle Bedingungen eine logische "1" darstellen, werden vier Bedingungen quittiert und ein Durchdrehen des Rades erkannt. Auf diese Weise kann eine einfache und zuverlässige logische Verknüpfung "UND" zwischen den Überschreitungen der jeweiligen Schwellenwerte durch die entsprechenden Signale zur Verfügung gestellt werden.

Des Weiteren kann die Erfindung bei einem Verfahren zum Detektieren eines Durchdrehens eines Rades eines Fahrzeuges vorsehen, dass das Quittieren der ersten Bedingung beim Überschreiten des ersten Schwellenwertes durch das erste Signal und das Quittieren der zweiten Bedingung beim Überschreiten des zweiten Schwellenwertes durch das zweite Signal für eine definierte erste Zeitdauer, insbesondere für 10 ms, angehalten und nicht überschrieben wird. Die Drehbeschleunigung und der Drehruck überschreiten erfahrungsgemäß nur für eine relativ kurze Zeit (von ca. 5 ms bis 10 ms) die entsprechenden Schwellenwerte. Das dritte und das vierte Signal überschreiten aufgrund der Integration erst verzögert die entsprechenden Schwellenwerte. Durch Anhalten der Quittierungen der ersten und der zweiten Bedingungen kann die Verzögerung durch die Integration kompensiert werden.

Zudem kann die Erfindung bei einem Verfahren zum Detektieren eines Durchdrehens eines Rades eines Fahrzeuges vorsehen, dass das positive Detektionssignal nach dem Erkennen des Durchdrehens des Rades im Schritt 4) dauerhaft aufrechterhalten und nicht verändert wird, insbesondere bis ein Stabilisierungssignal des Rades detektiert wurde und vorzugsweise für eine definierte zweite Zeitdauer vorliegt. Nach einem Durchdrehen des Rades, solange sich das Rad weiterhin im instabilen Bereich befindet, liefert die logische Verknüpfung "UND" zwischen den Überschreitungen der jeweiligen Schwellenwerte durch die Signale ständig abwechselnd "0" und "1". Mit dem Aufrechterhalten des positiven Detektionssignals kann sichergestellt werden, dass das erkannte Durchdrehen des Rades solange aufrechterhalten wird, bis ein Stabilisieren des Rades tatsächlich bestätigt wird. Das Aufrechterhalten des positiven Detektionssignals kann bspw. mit einem Schaltblock, sog. RS-Flip-Flop, ermöglicht werden, der ab dem Erkennen des Durchdrehens des Rades das Detektionssignal auf eine logische "1" setzt und somit ein positives Detektionssignal dauerhaft liefert. Auf diese Weise wird eine zuverlässige Erkennung des Durchdrehens des Rades gewährleistet. Nur die erste logische "1" bei dem Detektionssignal (d. h. wenn alle Bedingungen eine logische "1" darstellen bzw. wenn alle vier Bedingungen quittiert sind) wird betrachtet, und erst nach Stabilisierung des Rades wird das Detektionssignal auf null gesetzt. Daraufhin kann das Verfahren wiederholt werden, indem auf eine neue logische "1" bei dem Detektionssignal gewartet wird.

Außerdem kann die Erfindung bei einem Verfahren zum Detektieren eines Durchdrehens eines Rades eines Fahrzeuges vorsehen, dass das Verfahren mindestens einen weiteren von den folgenden Schritten aufweist:
5) Erzeugen eines fünften Signals für einen Flächeninhalt unterhalb des dritten Signals durch die Steuereinheit, insbesondere ab einem Zeitpunkt, wenn ein Durchdrehen des Rades erkannt wurde,
6a) Erzeugen eines absoluten ersten Signals für eine Betragsfunktion des ersten Signals,
6b) Erzeugen eines absoluten zweiten Signals für eine Betragsfunktion des zweiten Signals,
6c) Erzeugen eines absoluten dritten Signals für eine Betragsfunktion des dritten Signals, und/oder
6d) Erzeugen eines absoluten vierten Signals für eine Betragsfunktion des vierten Signals.

Das fünfte Signal entspricht einer Integration des dritten Signals ab dem Zeitpunkt des erkannten Durchdrehens. Ein Zeitintegrator für die definierte zweite Zeitdauer kann dabei durch das positive Detektionssignal, welches "Durchdrehen erkannt" bedeutet, zurückgesetzt werden. Das fünfte Signal liefert einen physikalischen Zustand der Geschwindigkeitsdifferenz zwischen der Radgeschwindigkeit zum Zeitpunkt des Durchdrehens und der aktuellen Geschwindigkeit des Rades. Das fünfte Signal kann mit anderen Worten als eine Annäherung zwischen der Geschwindigkeit des Rades und des Fahrzeugs dargestellt werden. Dabei kann angenommen werden, dass das Rad deutlich schneller beschleunigt wird als das Fahrzeug, und dass das Rad auf die ursprüngliche Geschwindigkeit wieder fallen muss, um wieder als stabil betrachtet zu werden.

Darüber hinaus kann die Erfindung bei einem Verfahren zum Detektieren eines Durchdrehens eines Rades eines Fahrzeuges vorsehen, dass das Verfahren mindestens einen weiteren von den folgenden Schritten aufweist:
7a) Überwachen des absoluten ersten Signals auf Überschreiten eines absoluten ersten Schwellenwertes,
7b) Überwachen des absoluten zweiten Signals auf Überschreiten eines absoluten zweiten Schwellenwertes,
7c) Überwachen des absoluten dritten Signals auf Überschreiten eines absoluten dritten Schwellenwertes,
7d) Überwachen des absoluten vierten Signals auf Überschreiten eines absoluten vierten Schwellenwertes,
7e) Überwachen des fünften Signals auf Überschreiten eines absoluten fünften Schwellenwertes, und/oder
8) Erzeugen eines Stabilisierungssignals,
wenn in allen Schritten 7a) bis 7d), insbesondere für eine definierte zweite Zeitdauer, der jeweilige Schwellenwert durch das korrespondierende absolute Signal nicht überschritten wird bzw. wenn alle absoluten Signale auf null "0" bleiben.

Auf diese Weise kann eine logische "ODER" Verknüpfung zwischen den fünf Signalen geschaffen werden. Die fünf Signale, die am Eingang der "ODER" Verknüpfung vorliegen, weisen einzeln auf einen instabilen Zustand des Rades hin. Der Ausgang der "ODER" Verknüpfung setzt den Zeitintegrator immer wieder zurück, wenn eines der fünf Signale auf ein Instabiles Verhalten des Rades hindeutet. Das Rad wird wieder als "stabil" betrachtet, wenn für eine definierte zweite Zeitdauer, bspw. 50 ms, alle fünf Signale auf "0" bleiben.

Vorteilhafterweise kann die Erfindung vorsehen, dass das Verfahren mindestens einen weiteren von den folgenden Schritten aufweist:
9) Bestimmen, insbesondere einfaches Berechnen, einer maximal übertragbaren Längskraft durch das Rad auf eine Fahrbahn in Abhängigkeit von einem Radantriebsmoment und/oder einem Radbremsmoment im oder (unmittelbar) nach dem Zeitpunkt, wenn im Schritt 4) das Durchdrehen oder das Blockieren des Rades erkannt wurde, und/oder
10) Bestimmen, insbesondere einfaches Berechnen, eines Reibwertes zwischen einem Reifen des Rads und einer Fahrbahn.

Somit kann mithilfe der Erfindung nicht nur ein Durchdrehen und ein Stabilisieren des Rades zuverlässig erkannt werden, sondern in Kenntnis des Zeitpunktes, wenn das Rad die Haftreibung mit der Fahrbahn verliert, einfache Regeln für die Momenterhaltung beim Gleiten des Rades über die Fahrbahn eingesetzt werden, um die maximal übertragbare Längskraft des Rades zu bestimmen. Einfach ist wiederum in Kenntnis der maximal übertragbaren Längskraft des Rades den Reibwert zwischen einem Reifen des Rads und einer Fahrbahn zu berechnen.

Ferner wird die erfindungsgemäße Aufgabe durch ein entsprechendes Assistenzsystem für ein Fahrzeug gelöst, welches in Form eines Antiblockiersystems oder eines Schlupfregelsystems ausgeführt sein kann, die ebenfalls als ABS- und ASR-Systeme bezeichnet werden können. Das Fahrzeug ist dabei mit mindestens einem Rad zum Antreiben des Fahrzeuges ausgeführt, wobei das Rad mindestens einen Drehzahlsensor aufweist. Das erfindungsgemäße Assistenzsystem weist vorteilhafterweise eine Steuereinheit auf, die dazu ausgeführt ist, ein Durchdrehen des Rades gemäß einem Verfahren zu detektieren, welches wie oben beschrieben ablaufen kann. Mithilfe des erfindungsgemäßen Assistenzsystems werden die gleichen Vorteile erreicht, die oben im Zusammenhang mit dem erfindungsgemäßen Verfahren beschrieben wurden. Auf diese Vorteile wird vorliegend vollumfänglich Bezug genommen.

Dabei kann die Steuereinheit direkt mit dem Drehzahlsensor und/oder mit einer zentralen Steuereinheit des Fahrzeuges in einer Kommunikation sowie Datenverbindung stehen, um die Messwerte des Drehzahlsensor abzufragen und/oder zu erhalten.

Im Rahmen der Erfindung ist es weiterhin denkbar, dass die Steuereinheit als eine separate Steuereinheit ausgeführt (vorteilhaft, wenn jedem Rad eine Steuereinheit zugeordnet ist) oder in der zentralen Steuereinheit des Fahrzeuges (vorteilhaft, wenn eine gemeinsame Steuereinheit für alle Fahrzeugräder gewünscht ist) implementiert sein kann.

Weiterhin wird die Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken.

Es zeigen:
- Fig. 1: eine beispielhafte Darstellung eines Schaltbildes einer Steuereinheit zum Durchführen eines Verfahrens zum Detektieren eines Durchdrehens eines Rades eines Fahrzeuges im Sinne der Erfindung,
- Fig. 2: eine beispielhafte Darstellung der Signale sowie neuartiger Raddynamikmerkmale im Sinne der Erfindung zum Erklären eines Verfahrens zum Detektieren eines Durchdrehens eines Rades eines Fahrzeuges im Sinne der Erfindung,
- Fig. 3: eine beispielhafte Darstellung eines Detektionssignals im Sinne der Erfindung,
- Fig. 4: eine schematische Darstellung eines Assistenzsystems im Sinne der Erfindung,
- Fig. 5: eine schematische Darstellung eines Assistenzsystems im Sinne der Erfindung, und
- Fig. 6: eine schematische Darstellung eines Assistenzsystems im Sinne der Erfindung.

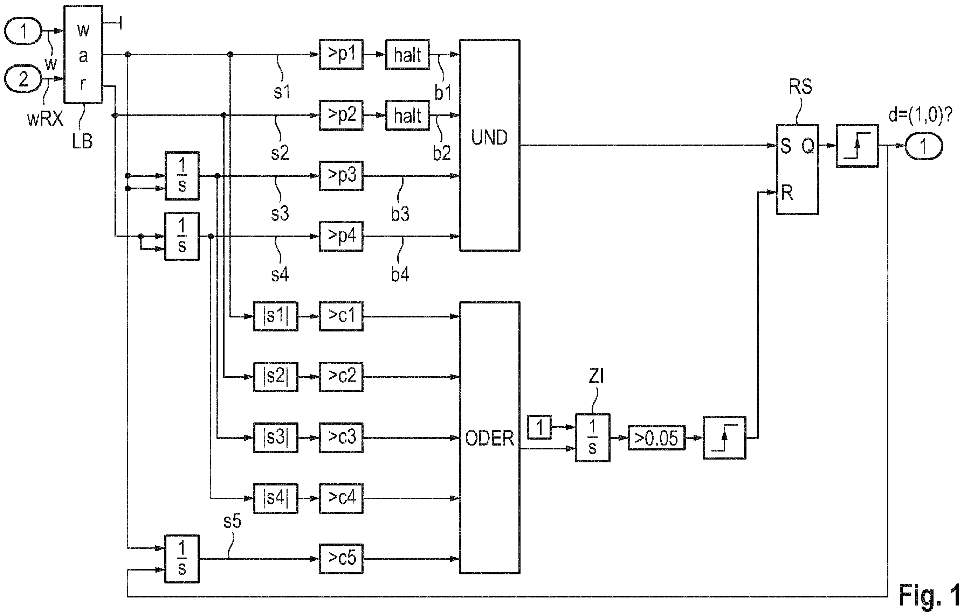

Die Figur 1 dient zur Veranschaulichung des erfindungsgemäßen Verfahrens und des Schaltbildes einer erfindungsgemäßen Steuereinheit 200, die zum Ausführen des erfindungsgemäßen Verfahrens ausgelegt ist.

Das erfindungsgemäße Verfahren dient zum Detektieren eines Durchdrehens d* eines Rades 150 eines Fahrzeuges 100, d. h. eines Überganges eines Reifens des Rades 150 aus der Haftreibung in die Gleitreibung auf einer Fahrbahn, insbesondere unabhängig von einer Messung und/oder Schätzung eines Schlupfs eines Reifens des Rades 150 und/oder eines Reibwerts zwischen dem Reifen des Rades 150 und der Fahrbahn.

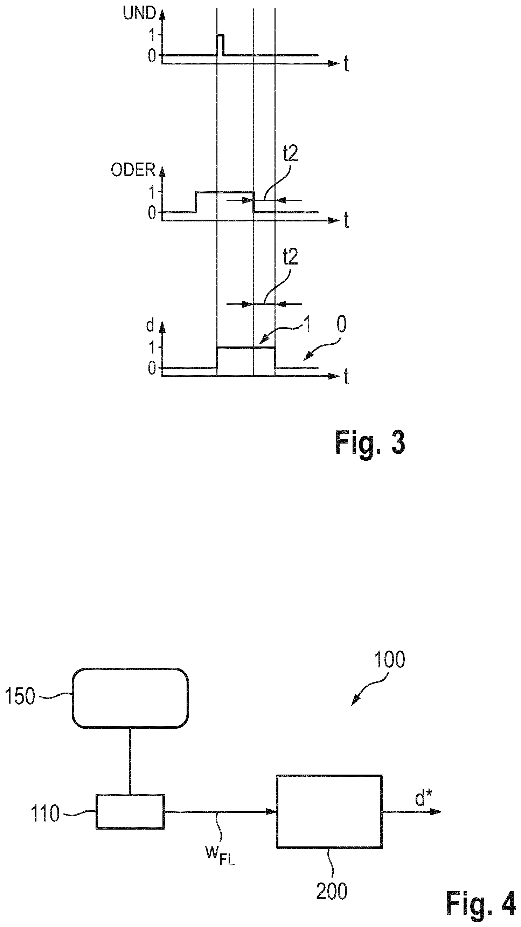

Dem Rad 150 ist dabei mindestens ein Drehzahlsensor 110 zugeordnet, wie es im nachfolgenden die Figuren 4, 5 und 6 andeuten. Das Verfahren wird mithilfe einer Steuereinheit 200 durchgeführt, die ebenfalls in den Figuren 4, 5 und 6 schematisch dargestellt ist, und weist folgende Schritte auf:
1) Erfassen einer Drehgeschwindigkeit w des Rades 150 durch den mindestens einen Drehzahlsensor 110,
2a) Erzeugen eines ersten Signals s1 für eine Drehbeschleunigung a des Rades 150 durch die Steuereinheit 200,
   wobei die Drehbeschleunigung a des Rades 150 in Abhängigkeit von der erfassten Drehgeschwindigkeit w bestimmt bzw. berechnet wird,
2b) Erzeugen eines zweiten Signals s2 für einen Drehruck r des Rades 150 durch die Steuereinheit 200,
   wobei der Drehruck r des Rades 150 in Abhängigkeit von der bestimmten Drehbeschleunigung a bestimmt bzw. berechnet wird,
3a) Überwachen des ersten Signals s1 auf Überschreiten eines ersten Schwellenwertes p1,
3b) Überwachen des zweiten Signals s2 auf Überschreiten eines zweiten Schwellenwertes p2,
4) Erzeugen eines positiven Detektionssignals 0 durch die Steuereinheit 200, dass das Durchdrehen d* des Rades 150 erkannt wurde, wenn der erste Schwellenwert p1 durch das erste Signal s1 und der zweite Schwellenwert p2 durch das zweite Signal s2 überschritten wurden.

Der Erfindung stellt ein neuartiges Verfahren zur Erkennung eines Durchdrehens d* des Rades 150 bereit. Zum Zeitpunkt des Durchdrehens d* des Rades 150 liegt eine vollständige Ausnutzung des Kraftschlusspotentials des Rades 150 vor. In diesem Zeitpunkt findet eine ruckartige Beschleunigung des Rades 150 statt.

Die Erfindung führt neuartige Raddynamikmerkmale s3, s4 ein. Diese Raddynamikmerkmale s3, s4 basieren insbesondere auf der Drehbeschleunigung a und dem Drehruck r des Rads 150. Auf Basis der Drehbeschleunigung a und des Drehruckes r des Rades 150 können im Rahmen der Erfindung vier Signale s1, s2, s3, s4 generiert werden: zum einen die Signale s1, s2 für die Drehbeschleunigung a und den Drehruck r selbst und zum anderen die Signale s3, s4 für die Flächen unter dem Verlauf der jeweiligen Signale s1, s2, wie es die Figur 1 andeutet. Bei den Signalen s3, s4 wird der Integrator bei Nulldurchgang zurückgesetzt. Es wird dementsprechend die Fläche unter dem jeweiligen Signal s1, s2 ab dem letzten Nulldurchgang gemessen.

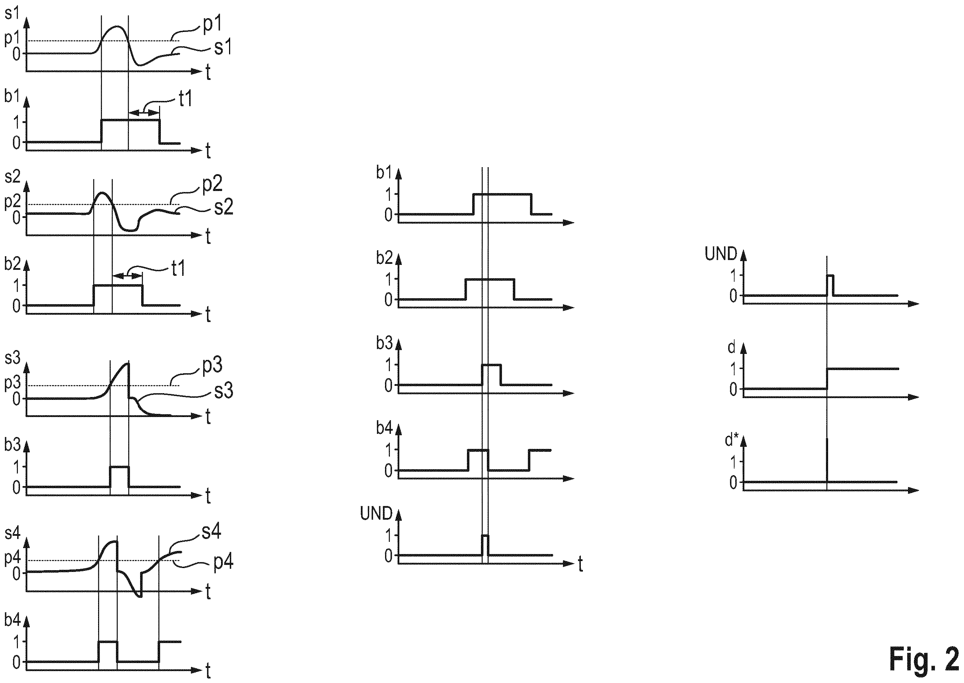

Für die jeweiligen Signale s1, s2, s3, s4 werden im Rahmen der Erfindung einzelne Schwellenwerte p1, p2, p3, p4 gezielt ausgewählt, wie es links in der Figur 2 schematisch gezeigt ist. Die Schwellenwerte p1, p2, p3, p4 können auf Basis von Erfahrungswerten und/oder modellierten Werten der Drehbeschleunigung a und des Drehruckes r sowie der Raddynamikmerkmale s3, s4 zum Zeitpunkt des Durchdrehens d* des Rades 150 bestimmt werden.

Wenn die einzelne Signale s1, s2, s3, s4 über die entsprechenden Schwellenwerte p1, p2, p3, p4 steigen, werden sog. Bedingungen b1, b2, b3, b4 quittiert, wobei vermerkt wird, dass das jeweilige Signal s1, s2, s3, s4 den zugeordneten Schwellenwert p1, p2, p3, p4 überschritten hat, wie es in der Mitte der Figur 2 gezeigt ist.

Das Quittieren der Bedingungen b1, b2 für die Signale s1, s2 der Drehbeschleunigung a und des Drehrucks r kann vorteilhafterweise, selbst nach Unterschreiten der definierten Schwellenwerte p1, p2 für eine erste Zeitdauer t1, bspw. für 10 ms, erhalten bleiben, wie dies das Zeichen "halt" in der Figur 1 und die erste Zeitdauer t1 in der Figur 2 andeuten.

Sobald alle Bedingungen b1, b2, b3, b4 gleichzeitig vorliegen, wird ein Durchdrehen d* des Rades 150 detektiert (vgl. die logische Verknüpfung "UND" im Schaltbild der Figur 1 und die entsprechenden Funktionen in der Figur 2).

Die Raddrehbeschleunigung a und der Raddrehruck r liegen nicht als Messwerte vor. Wie die Figur 1 andeutet, kann die Raddrehbeschleunigung a und der Raddrehruck r sowie die Raddrehgeschwindigkeit w an sich mithilfe eines regelungstechnischen Beobachters, bspw. eines Luenberger-Beobachters LB, auf Basis des Raddrehgeschwindigkeitssignals w geschätzt werden. Die Drehgeschwindigkeit w wird hierzu durch den mindestens einen Drehzahlsensor 110 am Rad 150 gemessen. Die Implementierung mithilfe des Luenberger-Beobachters LB ermöglicht eine schnelle und zuverlässige Rekonstruktion der Raddrehbeschleunigung a und des Raddrehrucks r mit geringer Phasenverschiebung, mit einer hohen Robustheit gegen Signalrauschen sowie fehlende CAN-Nachrichten für das Raddrehgeschwindigkeitssignal w, mit Hilfe eines Zeitsignals wRX.

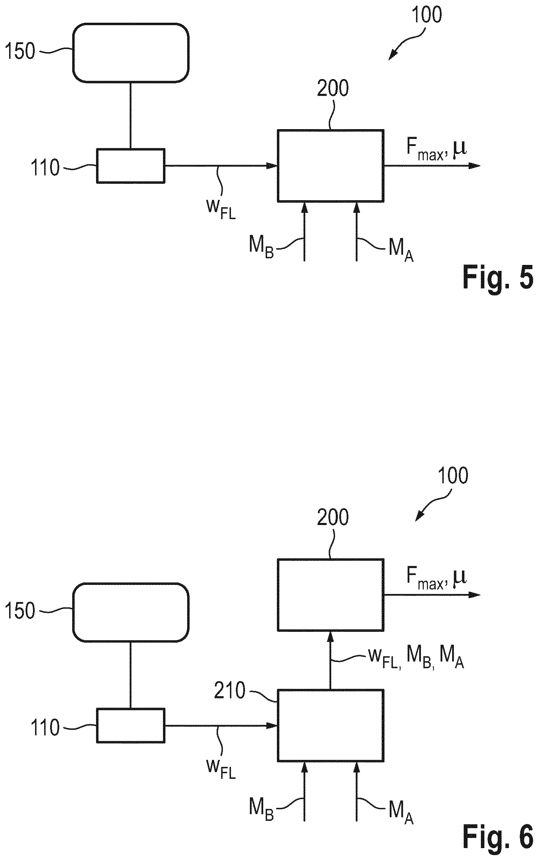

Die Erfindung ermöglicht ferner eine Erkennung des Durchdrehens d* des Rades 150 mit einem minimalen Zeitverzug, vorteilhafterweise von weniger als 20 ms. In Kenntnis des Durchdrehens d* des Rades 150 können vorteilhafterweise weitere Eigenschaften für das Radverhalten extrahiert werden. Mit der Annahme, dass das wirkende Radantriebsmoment Ma sowie das Radbremsmoment Mb zum Zeitpunkt des Durchdrehens d* bzw. Blockierens als Signal vorliegen (vgl. die Figuren 5 und 6), bietet die Erfindung die Möglichkeit an, die maximal übertragbaren Reifenlängskräfte Fmax, bspw. mit Hilfe des Drallsatzes des Rades 150 und einer einfachen Vektormultiplikation mit dem Radradius, zu berechnen. Weiterhin kann mithilfe der Erfindung eine zuverlässige Bestimmung eines entsprechenden maximalen Rad-Fahrbahn-Reibwerts µ durchgeführt werden. Dabei können die aktuelle Radaufstandskraft sowie Radquerkraft genutzt werden, um den maximalen Rad-Fahrbahn-Reibwert µ in Abhängigkeit von der maximal übertragbaren Längskraft Fmax eines Reifens des Rades 150 zu berechnen.

Wie oben bereits erwähnt, kann die Erfindung im Rahmen des Verfahrens folgende Schritte vorsehen:
2c) Erzeugen eines dritten Signals s3 für einen Flächeninhalt unterhalb des ersten Signals s1 durch die Steuereinheit 200,
2d) Erzeugen eines vierten Signals s4 für einen Flächeninhalt unterhalb des zweiten Signals s2 durch die Steuereinheit 200,
3c) Überwachen des dritten Signals s3 auf Überschreiten eines dritten Schwellenwertes p3,
3d) Überwachen des vierten Signals s4 auf Überschreiten eines vierten Schwellenwertes p4, wobei im Schritt 4) ein positives Detektionssignal 1 erzeugt wird, dass ein Durchdrehen d* des Rades 150 erkannt wurde, wenn der erste Schwellenwert p1 durch das erste Signal s1, der zweite Schwellenwert p2 durch das zweite Signal s2, der dritte Schwellenwert p3 durch das dritte Signal s3 und der vierte Schwellenwert p4 durch das vierte Signal s4 überschritten wurden.

Die vier Signale s1, s2, s3, s4 beschreiben das dynamische Verhalten des Rades 150. Im stabilen Bereich des Rades 150 (kein Durchdrehen d*) erreichen diese Signale s1, s2, s3, s4 nur geringfügige Werte. Eine instabiles Verhalten (Durchdrehen d* oder sogar Durchdrehtendenz) charakterisiert sich durch hohe Werte dieser Signale s1, s2, s3, s4. Beim Durchdrehen d* des Rades 150 wird erwartet, dass alle vier Signale s1, s2, s3, s4 die zugehörigen Schwellenwerte p1, p2, p3, p4 überschreiten. Auf diese Weise kann die Robustheit der Detektion erhöht werden und die Falsch-Erkennungen reduziert werden. Erfahrungsgemäß können die einzelnen Überschreitungen der Schwellenwerte p1, p2, p3, p4 durch andere Vorgänge, wie z. B. schnelles Lenken, Lastwechsel usw., aktiviert werden. Durch Quittieren von allen vier Überschreitungen kann sichergestellt werden, dass das tatsächliche Durchdrehen d* des Rades 150 von den anderen Vorgängen unterschieden werden kann.

Die Figur 2 zeigt, dass die jeweilige Bedingung b1, b2, b3, b4 als eine logische "1" dargestellt werden kann, die beim Überschreiten eines bestimmten Schwellenwertes p1, p2, p3, p4 durch das korrespondierende Signal s1, s2, s3, s4 vorgemerkt wird. Wenn alle vier Bedingungen b1, b2, b3, b4 eine logische "1" darstellen, werden vier Bedingungen b1, b2, b3, b4 quittiert und ein Durchdrehen d* des Rades erkannt. Die Figuren 1, 2 und 3 zeigen zum Überprüfen der Überschreitungen der jeweiligen Schwellenwerte p1, p2, p3, p4 durch alle vier Signale s1, s2, s3, s4 eine logische Verknüpfung "UND".

Ferner zeigen die Figuren 1 und 2, dass das Quittieren der ersten Bedingung b1 beim Überschreiten des ersten Schwellenwertes p1 durch das erste Signal s1 und das Quittieren der zweiten Bedingung b2 beim Überschreiten des zweiten Schwellenwertes p2 durch das zweite Signal s2 für eine definierte erste Zeitdauer t1, bspw. für 10 ms, angehalten bzw. aufrechterhalten und nicht überschrieben wird. Die Drehbeschleunigung a und der Drehruck r überschreiten erfahrungsgemäß nur für kurze Zeit von ca. 5 - 10 ms die entsprechenden Schwellenwerte p1 bzw. p2. Das dritte Signal s3 und das vierte Signal s4 überschreiten aufgrund der Integration erst verzögert die entsprechenden Schwellenwerte p3 bzw. p4. Durch die Blöcke "halt" der Quittierungen der ersten und der zweiten Bedingungen b1, b2 kann die Verzögerung durch die Integration kompensiert werden.

Zudem zeigt die Figur 2 sowie die Figur 3, dass das positive Detektionssignal 1 nach dem Erkennen des Durchdrehens d* des Rades 150 dauerhaft aufrechterhalten und nicht verändert wird, vorzugsweise bis ein Stabilisierungssignal 0 des Rades 150, insbesondere für eine definierte zweite Zeitdauer t2, vorliegt. Nach einem Durchdrehen d* des Rades 150, solange sich das Rad 150 weiterhin im instabilen Bereich befindet, liefert die logische Verknüpfung "UND" zwischen den Überschreitungen der jeweiligen Schwellenwerte p1, p2, p3, p4 durch die Signale s1, s2, s3, s4 ständig abwechselnd "0" und "1". Mit dem Aufrechterhalten des positiven Detektionssignals 1 kann sichergestellt werden, dass das erkannte Durchdrehen d* des Rades 150 solange aufrechterhalten wird, bis ein Stabilisieren des Rades 150 bestätigt wird.

Wie es die Figur 1 andeutet, kann das Aufrechterhalten des positiven Detektionssignals 1 mit einem Schaltblock RS, sog. RS-Flip-Flop, ermöglicht werden, der ab dem Erkennen des Durchdrehens d* des Rades 150 das Detektionssignal d auf eine logische "1" setzt und somit ein positives Detektionssignal 1 dauerhaft liefert, wie es rechts in der Figur 2 gezeigt ist. Auf diese Weise wird nur die erste logische "1" bei dem Detektionssignal d (wenn alle Bedingungen b1, b2, b3, b4 eine logische "1" darstellen bzw. wenn alle vier Bedingungen b1, b2, b3, b4 quittiert sind) betrachtet und erst nach dem Erkennen einer Stabilisierung des Rades 150 auf "0" gesetzt. Daraufhin kann das Verfahren wiederholt werden, indem auf eine neue logische "1" bei dem Detektionssignal d gewartet wird.

Außerdem kann die Erfindung vorsehen, dass die Erkenntnis über den Zeitpunkt des Durchdrehens d* zum Detektieren eines Stabilisierens des Rades 150 genutzt werden kann. Hierzu kann das Verfahren mindestens einen weiteren von den folgenden Schritten aufweisen:
5) Erzeugen eines fünften Signals s5 für einen Flächeninhalt unterhalb des dritten Signals s3 durch die Steuereinheit 200, insbesondere ab einem Zeitpunkt, wenn ein Durchdrehen des Rades 150 erkannt wurde,
6a) Erzeugen eines absoluten ersten Signals |s1| für eine Betragsfunktion des ersten Signals s1,
6b) Erzeugen eines absoluten zweiten Signals |s2| für eine Betragsfunktion des zweiten Signals s2,
6c) Erzeugen eines absoluten dritten Signals |s3| für eine Betragsfunktion des dritten Signals s3, und/oder
6d) Erzeugen eines absoluten vierten Signals |s4| für eine Betragsfunktion des vierten Signals s4.

Das fünfte Signal s5 entspricht einer Fläche unterhalb des dritten Signals s3 ab dem Zeitpunkt des erkannten Durchdrehens d*. Ein Integrator, welcher für die Generierung des fünften Signal s5 zuständig ist, wird durch das Signal des erkannten Durchdrehens d* zurückgesetzt. Das fünfte Signal s5 liefert einen physikalischen Zustand der Geschwindigkeitsdifferenz zwischen der Drehgeschwindigkeit w zum Zeitpunkt des Durchdrehens d* und der aktuellen Drehgeschwindigkeit w des Rades 150. Das fünfte Signal s5 kann auch als eine Annäherung der Geschwindigkeitsdifferenz zwischen der Umfangsgeschwindigkeit des Rades 150 und des Fahrzeugs 100 dargestellt werden. Dabei kann angenommen werden, dass das Rad 150 deutlich schneller beschleunigt wird als das Fahrzeug 100, und dass das Rad 150 auf die ursprüngliche Geschwindigkeit wieder fallen muss, um wieder als stabil betrachtet zu werden.

Zum Erkennen eines Stabilisierens des Rades 150 kann das Verfahren mindestens einen weiteren von den folgenden Schritten aufweisen:
7a) Überwachen des absoluten ersten Signals |s1| auf Überschreiten eines absoluten ersten Schwellenwertes c1,
7b) Überwachen des absoluten zweiten Signals |s2| auf Überschreiten eines absoluten zweiten Schwellenwertes c2,
7c) Überwachen des absoluten dritten Signals |s3| auf Überschreiten eines absoluten dritten Schwellenwertes c3,
7d) Überwachen des absoluten vierten Signals |s4| auf Überschreiten eines absoluten vierten Schwellenwertes c4,
7e) Überwachen des fünften Signals s5 auf Überschreiten eines absoluten fünften Schwellenwertes c5, und/oder
8) Erzeugen eines Stabilisierungssignals 0,
wenn in allen Schritten 7a bis 7d, insbesondere für eine definierte zweite Zeitdauer t2, der jeweilige Schwellenwert c1, c2, c3, c4, c5 durch das korrespondierende absolute Signal |s1|, |s2|, |s3|, |s4|, s5 nicht überschritten wird bzw. wenn alle absoluten Signale |s2|, |s3|, |s4|, s5 auf null "0" bleiben.

Wie es die Figur 1 zeigt, kann dabei eine logische "ODER"-Verknüpfung zwischen den fünf Signalen |s1|, |s2|, |s3|, |s4|, s5 geschaffen werden. Die fünf Signale |s1|, |s2|, |s3|, |s4|, s5, die am Eingang der "ODER"-Verknüpfung vorliegen, weisen einzeln auf einen instabilen Zustand des Rades 150 hin. Der Ausgang der "ODER" Verknüpfung setzt den Zeitintegrator ZI für eine definierte zweite Zeitdauer t2 immer wieder zurück, wenn nur einer der fünf Signale s1, s2, s3, s4, s5 auf ein instabiles Verhalten des Rades 150 hindeutet. Das Rad 150 wird wieder als "stabil" betrachtet, wenn für eine definierte zweite Zeitdauer t2, bspw. 50 ms, alle fünf Signale auf "0" bleiben.

Die Figuren 4, 5 und 6 zeigen ein entsprechendes Assistenzsystem für ein Fahrzeug 100, welches in Form eines Antiblockiersystems oder eines Schlupfregelsystems ausgeführt sein kann, die ebenfalls als ABS- und ASR-Systeme bezeichnet werden können. Das Fahrzeug 100 ist dabei mit mindestens einem Rad 150 zum Antreiben des Fahrzeuges 100 ausgeführt, wobei das Rad 150 mindestens einen Drehzahlsensor 110 aufweist. Das erfindungsgemäße Assistenzsystem weist vorteilhafterweise eine Steuereinheit 200 auf, die dazu ausgeführt ist, ein Durchdrehen d* des Rades 150 gemäß einem Verfahren zu detektieren, welches wie oben beschrieben ablaufen kann.

Die erfindungsgemäße Steuereinheit 200 kann gemäß dem Ausführungsbeispiel der Figur 5 direkt mit dem Drehzahlsensor 110 und/oder gemäß dem Ausführungsbeispiel der Figur 6 mit einer zentralen Steuereinheit 210 des Fahrzeuges 100 in einer Kommunikation sowie Datenverbindung stehen, um die Messwerte des Drehzahlsensors 110 abzufragen und/oder zu erhalten. Im Rahmen der Erfindung ist es weiterhin denkbar, dass die Steuereinheit 200 als eine separate Steuereinheit 200 ausgeführt, bspw. für jedes Rad 150 des Fahrzeuges 100, oder in der zentralen Steuereinheit 210 des Fahrzeuges 100 implementiert sein kann.

Die voranstehende Beschreibung der Figuren beschreibt die vorliegende Erfindung ausschließlich im Rahmen von Beispielen. Selbstverständlich können Änderungen innerhalb des Schutzumfangs der Ansprüche vorgenommen werden.

### Bezugszeichenliste

- 100: Fahrzeug

- 110: Drehzahlsensor
- 150: Rad

- 200: Steuereinheit
- 210: zentrale Steuereinheit

- w: Drehgeschwindigkeit, Drehgeschwindigkeitssignal
- wRX: Zeitstempel

- a: Drehbeschleunigung
- r: Drehruck

- s3, s4: Raddynamikmerkmale

- d: Detektionssignal
- d*: Durchdrehen
- 1: positives Detektionssignal
- 0: Stabilisierungssignal

- s1: erstes Signal
- s2: zweites Signal
- s3: drittes Signal
- s4: viertes Signal

- p1: erster Schwellenwert
- p2: zweiter Schwellenwert
- p3: dritter Schwellenwert
- p4: vierter Schwellenwert

- b1: erste Bedingung
- b2: zweite Bedingung
- b3: dritte Bedingung
- b4: vierte Bedingung

- t1: erste Zeitdauer
- t2: zweite Zeitdauer

- |s1|: absolutes erstes Signal
- |s2|: absolutes zweites Signal
- |s3|: absolutes drittes Signal
- |s4|: absolutes viertes Signal

- s5: fünftes Signal

- c1: absoluter erster Schwellenwert
- c2: absoluter zweiter Schwellenwert
- c3: absoluter dritter Schwellenwert
- c4: absoluter vierter Schwellenwert
- c5: absoluter fünfter Schwellenwert

- µ: Rad-Fahrbahn-Reibwert

- Fmax: maximal übertragbare Längskraft

- LB: Luenberger-Beobachter

- Ma: Radantriebsmoment
- Mb: Radbremsmoment

- RS: Schaltblock

- ZI: Zeitintegrator

## Patentansprüche

1. Verfahren zum Detektieren eines Durchdrehens (d*) eines Rades (150) eines Fahrzeuges (100), insbesondere unabhängig von einer Messung und/oder Schätzung eines Schlupfs eines Reifens des Rades (150) und/oder eines Reibwerts zwischen dem Reifen des Rades (150) und einer Fahrbahn,
wobei dem Rad (150) mindestens ein Drehzahlsensor (110) zugeordnet wird,
und wobei das Verfahren mithilfe einer Steuereinheit (200) des Fahrzeuges (100) durchgeführt wird,
umfassend folgende Schritte:
1) Erfassen einer Drehgeschwindigkeit (w) des Rades (150) durch den mindestens einen Drehzahlsensor (110),
2a) Erzeugen eines ersten Signals (s1) für eine Drehbeschleunigung (a) des Rades (150) durch die Steuereinheit (200),
wobei die Drehbeschleunigung (a) des Rades (150) in Abhängigkeit von der erfassten Drehgeschwindigkeit (w) bestimmt wird,
2b) Erzeugen eines zweiten Signals (s2) für einen Drehruck (r) des Rades (150) durch die Steuereinheit (200),
wobei der Drehruck (r) des Rades (150) in Abhängigkeit von der bestimmten Drehbeschleunigung (a) bestimmt wird,
3a) Überwachen des ersten Signals (s1) auf Überschreiten eines ersten Schwellenwertes (p1),
3b) Überwachen des zweiten Signals (s2) auf Überschreiten eines zweiten Schwellenwertes (p2),
4) Erzeugen eines positiven Detektionssignals (1) durch die Steuereinheit (200), dass das Durchdrehen (d*) des Rades (150) erkannt wurde,
wenn der erste Schwellenwert (p1) durch das erste Signal (s1) und der zweite Schwellenwert (p2) durch das zweite Signal (s2) überschritten wurden,
**dadurch gekennzeichnet,**
**dass** das erste Signal (s1) und das zweite Signal (s2) mithilfe eines Luenberger-Beobachters (LB) in Abhängigkeit eines Drehgeschwindigkeitssignals (w) rekonstruiert werden.

2. Verfahren nach Anspruch 1,
**dadurch gekennzeichnet,**
**dass** das Verfahren mindestens einen weiteren von den folgenden Schritten aufweist:
2c) Erzeugen eines dritten Signals (s3) für einen Flächeninhalt unterhalb des ersten Signals (s1) durch die Steuereinheit (200),
2d) Erzeugen eines vierten Signals (s4) für einen Flächeninhalt unterhalb des zweiten Signals (s2) durch die Steuereinheit (200),
3c) Überwachen des dritten Signals (s3) auf Überschreiten eines dritten Schwellenwertes (p3),
3d) Überwachen des vierten Signals (s4) auf Überschreiten eines vierten Schwellenwertes (p4),
wobei im Schritt 4) ein positives Detektionssignal (1) erzeugt wird, dass ein Durchdrehen (d*) des Rades (150) erkannt wurde,
wenn der erste Schwellenwert (p1) durch das erste Signal (s1), der zweite Schwellenwert (p2) durch das zweite Signal (s2), der dritte Schwellenwert (p3) durch das dritte Signal (s3) und der vierte Schwellenwert (p4) durch das vierte Signal (s4) überschritten wurden.

3. Verfahren nach Anspruch 1 oder 2,
**dadurch gekennzeichnet,**
**dass** beim Überschreiten des ersten Schwellenwertes (p1) durch das erste Signal (s1) eine erste Bedingung (b1) quittiert wird,
und/oder dass beim Überschreiten des zweiten Schwellenwertes (p2) durch das zweite Signal (s2) eine zweite Bedingung (b2) quittiert wird,
und/oder dass beim Überschreiten des dritten Schwellenwertes (p3) durch das dritte Signal (s3) eine dritte Bedingung (b3) quittiert wird,
und/oder dass beim Überschreiten des vierten Schwellenwertes (p4) durch das vierte Signal (s4) eine vierte Bedingung (b4) quittiert wird.

4. Verfahren nach dem vorhergehenden Anspruch,
**dadurch gekennzeichnet,**
**dass** das Quittieren der ersten Bedingung (b1) beim Überschreiten des ersten Schwellenwertes (p1) durch das erste Signal (s1) und das Quittieren der zweiten Bedingung (b2) beim Überschreiten des zweiten Schwellenwertes (p2) durch das zweite Signal (s2) für eine definierte erste Zeitdauer (t1), insbesondere für 10 ms, angehalten und nicht überschrieben wird.

5. Verfahren nach einem der vorhergehenden Ansprüche,
**dadurch gekennzeichnet,**
**dass** das positive Detektionssignal (1) nach dem Erkennen des Durchdrehens (d*) des Rades (150) im Schritt 4) dauerhaft aufrechterhalten und nicht verändert wird, insbesondere bis ein Stabilisierungssignal (0) des Rades (150) detektiert wurde und vorzugsweise für eine definierte zweite Zeitdauer (t2) vorliegt.

6. Verfahren nach einem der vorhergehenden Ansprüche,
**dadurch gekennzeichnet,**
**dass** das Verfahren mindestens einen weiteren von den folgenden Schritten aufweist:
5) Erzeugen eines fünften Signals (s5) für einen Flächeninhalt unterhalb des dritten Signals (s3) durch die Steuereinheit (200), insbesondere ab einem Zeitpunkt, in dem ein Durchdrehen des Rades (150) erkannt wurde,
6a) Erzeugen eines absoluten ersten Signals (|s1|) für eine Betragsfunktion des ersten Signals (s1),
6b) Erzeugen eines absoluten zweiten Signals (|s2|) für eine Betragsfunktion des zweiten Signals (s2),
6c) Erzeugen eines absoluten dritten Signals (|s3|) für eine Betragsfunktion des dritten Signals (s3), und/oder
6d) Erzeugen eines absoluten vierten Signals (|s4|) für eine Betragsfunktion des vierten Signals (s4).

7. Verfahren nach dem vorhergehenden Anspruch,
**dadurch gekennzeichnet,**
**dass** das Verfahren mindestens einen weiteren von den folgenden Schritten aufweist:
7a) Überwachen des absoluten ersten Signals (|s1|) auf Unterschreiten eines absoluten ersten Schwellenwertes (c1),
7b) Überwachen des absoluten zweiten Signals (|s2|) auf Unterschreiten eines absoluten zweiten Schwellenwertes (c2),
7c) Überwachen des absoluten dritten Signals (|s3|) auf Unterschreiten eines absoluten dritten Schwellenwertes (c3),
7d) Überwachen des absoluten vierten Signals (|s4|) auf Unterschreiten eines absoluten vierten Schwellenwertes (c4),
7e) Überwachen des fünften Signals (s5) auf Unterschreiten eines absoluten fünften Schwellenwertes (c5), und/oder
8) Erzeugen eines Stabilisierungssignals (0),
wenn in allen Schritten 7a) bis 7d), insbesondere für eine definierte zweite Zeitdauer (t2), der jeweilige Schwellenwert (c1, c2, c3, c4, c5) durch das korrespondierende absolute Signal (|s1|, |s2|, |s3|, |s4|, s5) nicht überschritten wird.

8. Verfahren nach dem vorhergehenden Anspruch,
**dadurch gekennzeichnet,**
**dass** das Verfahren mindestens einen weiteren von den folgenden Schritten aufweist:
9) Bestimmen, insbesondere Berechnen, einer maximal übertragbaren Längskraft (Fmax) durch das Rad (150) auf eine Fahrbahn in Abhängigkeit von einem Radantriebsmoment (Ma) und/oder einem Radbremsmoment (Mb) im oder nach dem Zeitpunkt, wenn im Schritt 4) das Durchdrehen (d*) oder ein Blockieren des Rades (150) erkannt wurde, und/oder
10) Bestimmen, insbesondere Berechnen, eines Reibwertes (µ) zwischen einem Reifen des Rads (150) und einer Fahrbahn.

9. Assistenzsystem für ein Fahrzeug (100) mit mindestens einem Rad (150) zum Antreiben des Fahrzeuges (100), wobei das Rad (150) mindestens einen Drehzahlsensor (110) aufweist,
aufweisend eine Steuereinheit (200), wobei die Steuereinheit (200) dazu ausgeführt ist, ein Durchdrehen (d*) des Rades (150) gemäß einem Verfahren nach einem der vorhergehenden Ansprüche zu detektieren.

## Claims

1. Method for detecting a revolution (d*) of a wheel (150) of a vehicle (100), in particular independently of a measurement and/or estimation of a slip of a tire of the wheel (150) and/or a coefficient of friction between the tire of the wheel (150) and a roadway, at least one rotational speed sensor (110) being associated with the wheel (150), and the method being carried out by means of a control unit (200) of the vehicle (100), comprising the following steps:
1) capturing a rotational speed (w) of the wheel (150) by means of the at least one rotational speed sensor (110),
2a) generating a first signal (s1) for a rotational acceleration (a) of the wheel (150) by means of the control unit (200), the rotational acceleration (a) of the wheel (150) being determined based on the captured rotational speed (w),
2b) generating a second signal (s2) for a rotational jerk (r) of the wheel (150) by means of the control unit (200),
the rotational jerk (r) of the wheel (150) being determined depending on the determined rotational acceleration (a),
3a) monitoring the first signal (s1) for exceeding a first threshold value (p1),
3b) monitoring the second signal (s2) for exceeding a second threshold value (p2),
4) generating, by means of the control unit (200), a positive detection signal (1) that the revolution (d*) of the wheel (150) has been detected if the first threshold value (p1) has been exceeded by the first signal (s1) and the second threshold value (p2) by the second signal (s2),
**characterized in that**
the first signal (s1) and the second signal (s2) are reconstructed by means of a Luenberger observer (LB) based on a rotational speed signal (w).

2. Method according to claim 1,
**characterized in that**
the method comprises at least one further of the following steps:
2c) generating a third signal (s3) for an area beneath the first signal (s1) by means of the control unit (200),
2d) generating a fourth signal (s4) for an area beneath the second signal (s2) by means of the control unit (200),
3c) monitoring the third signal (s3) for exceeding a third threshold value (p3),
3d) monitoring the fourth signal (s4) for exceeding a fourth threshold value (p4), a positive detection signal (1) that a revolution (d*) of the wheel (150) has been detected being generated in step 4) if the first threshold value (p1) has been exceeded by the first signal (s1), the second threshold value (p2) by the second signal (s2), the third threshold value (p3) by the third signal (s3), and the fourth threshold value (p4) by the fourth signal (s4).

3. Method according to claim 1 or 2,
**characterized in that**
if the first threshold value (p1) is exceeded by the first signal (s1), a first condition (b1) is acknowledged, and/or **in that** if the second threshold value (p2) is exceeded by the second signal (s2), a second condition (b2) is acknowledged, and/or **in that** if the third threshold value (p3) is exceeded by the third signal (s3), a third condition (b3) is acknowledged, and/or **in that** if the fourth threshold value (p3) is exceeded by the fourth signal (s3), a fourth condition (b3) is acknowledged.

4. Method according to the preceding claim,
**characterized in that**
the acknowledgment of the first condition (b1), if the first threshold value (p1) is exceeded by the first signal (s1), and the acknowledgment of the second condition (b2), if the second threshold value (p2) is exceeded by the second signal (s2), is stopped and not overwritten for a defined first time period (t1), in particular for 10 ms.

5. Method according to any of the preceding claims, **characterized in that** the positive detection signal (1) is permanently maintained and not changed after detecting the revolution (d*) of the wheel (150) in step 4), in particular until a stabilization signal (0) of the wheel (150) has been detected and is preferably present for a defined second time period (t2).

6. Method according to any of the preceding claims, **characterized in that** the method comprises at least one further of the following steps:
5) generating a fifth signal (s5) for an area beneath the third signal (s3) by means of the control unit (200), in particular from a point in time at which a revolution of the wheel (150) has been detected,
6a) generating an absolute first signal (|s1|) for an absolute value function of the first signal (s1),
6b) generating an absolute second signal (|s2|) for an absolute value function of the second signal (s2),
6c) generating an absolute third signal (|s3|) for an absolute value function of the third signal (s3), and/or
6d) generating an absolute fourth signal (|s4|) for an absolute value function of the fourth signal (s4).

7. Method according to the preceding claim, **characterized in that**
the method comprises at least one further of the following steps:
7a) monitoring the absolute first signal (|s1|) for falling below an absolute first threshold value (c1),
7b) monitoring the absolute second signal (|s2|) for falling below an absolute second threshold value (c2),
7c) monitoring the absolute third signal (|s3|) for falling below an absolute third threshold value (c3),
7d) monitoring the absolute fourth signal (|s4|) for falling below an absolute fourth threshold value (c4),
7e) monitoring the fifth signal (s5) for falling below an absolute fifth threshold value (c5), and/or
8) generating a stabilization signal (0),
if, in all steps 7a) to 7d), in particular for a defined second time period (t2), the relevant threshold value (c1, c2, c3, c4, c5) is not exceeded by the relevant absolute signal (|s1|, |s2|, |s3|, |s4|, s5).

8. Method according to the preceding claim,
**characterized in that**
the method comprises at least one further of the following steps:
9) determining, in particular calculating, a maximum transmittable longitudinal force (Fmax) through the wheel (150) on a roadway depending on a wheel drive torque (Ma) and/or a wheel brake torque (Mb) at or after the point in time when the revolution (d*) or locking of the wheel (150) has been detected in step 4), and/or
10) determining, in particular calculating, a coefficient of friction (µ) between a tire of the wheel (150) and a roadway.

9. Assistance system for a vehicle (100) having at least one wheel (150) for driving the vehicle (100), wherein the wheel (150) comprises at least one rotational speed sensor (110),
comprising a control unit (200), wherein the control unit (200) is designed to detect a revolution (d*) of the wheel (150) according to a method according to any of the preceding claims.

## Revendications

1. Procédé permettant de détecter un patinage (d*) d'une roue (150) d'un véhicule (100), en particulier indépendamment d'une mesure et/ou d'une estimation d'un patinage d'un pneumatique de la roue (150) et/ou d'un coefficient de frottement entre le pneumatique de la roue (150) et une chaussée, dans lequel au moins un capteur de vitesse de rotation (110) est associé à la roue (150), et dans lequel le procédé est mis en oeuvre à l'aide d'une unité de commande (200) du véhicule (100), comprenant les étapes suivantes :
1) détection d'une vitesse de rotation (w) de la roue (150) par l'au moins un capteur de vitesse de rotation (110),
2a) génération d'un premier signal (s1) pour une accélération de rotation (a) de la roue (150) par l'unité de commande (200), dans lequel l'accélération de rotation (a) de la roue (150) est déterminée en fonction de la vitesse de rotation (w) détectée,
2b) génération d'un deuxième signal (s2) pour un à-coup de rotation (r) de la roue (150) par l'unité de commande (200),
dans lequel l'à-coup de rotation (r) de la roue (150) est déterminé en fonction de l'accélération de rotation (a) déterminée,
3a) surveillance du premier signal (s1) en cas de dépassement d'une première valeur seuil (p1),
3b) surveillance du deuxième signal (s2) en cas de dépassement d'une deuxième valeur seuil (p2),
4) génération d'un signal de détection positif (1) par l'unité de commande (200), selon lequel le patinage (d*) de la roue (150) a été détecté, si la première valeur seuil (p1) a été dépassée par le premier signal (s1) et la deuxième valeur seuil (p2) a été dépassée par le deuxième signal (s2),
**caractérisé en ce que**
le premier signal (s1) et le deuxième signal (s2) sont reconstruits à l'aide d'un observateur de Luenberger (LB) en fonction d'un signal de vitesse de rotation (w).

2. Procédé selon la revendication 1,
**caractérisé en ce que**
le procédé présente au moins une étape supplémentaire parmi les étapes suivantes :
2c) génération d'un troisième signal (s3) pour une aire en dessous du premier signal (s1) par l'unité de commande (200),
2d) génération d'un quatrième signal (s4) pour une aire en dessous du deuxième signal (s2) par l'unité de commande (200),
3c) surveillance du troisième signal (s3) en cas de dépassement d'une troisième valeur seuil (p3),
3d) surveillance du quatrième signal (s4) en cas de dépassement d'une quatrième valeur seuil (p4), dans lequel, à l'étape 4), un signal de détection positif (1) est généré, selon lequel un patinage (d*) de la roue (150) a été détecté, si la première valeur seuil (p1) a été dépassée par le premier signal (s1), la deuxième valeur seuil (p2) a été dépassée par le deuxième signal (s2), la troisième valeur seuil (p3) a été dépassée par le troisième signal (s3) et la quatrième valeur seuil (p4) a été dépassée par le quatrième signal (s4).

3. Procédé selon la revendication 1 ou 2,
**caractérisé en ce que**
lors du dépassement de la première valeur seuil (p1) par le premier signal (s1), une première condition (b1) est acquittée, **et/ou que,** lors du dépassement de la deuxième valeur seuil (p2) par le deuxième signal (s2), une deuxième condition (b2) est acquittée, **et/ou que,** lors du dépassement de la troisième valeur seuil (p3) par le troisième signal (s3), une troisième condition (b3) est acquittée, **et/ou que,** lors du dépassement de la quatrième valeur seuil (p4) par le quatrième signal (s4), une quatrième condition (b4) est acquittée.

4. Procédé selon la revendication précédente,
**caractérisé en ce que**
l'acquittement de la première condition (b1) lors du dépassement de la première valeur seuil (p1) par le premier signal (s1) et l'acquittement de la deuxième condition (b2) lors du dépassement de la deuxième valeur seuil (p2) par le deuxième signal (s2) sont arrêtés pendant une première durée définie (t1), en particulier pendant 10 ms, et ne sont pas écrasés.

5. Procédé selon l'une des revendications précédentes,
**caractérisé en ce que**
le signal de détection positif (1) est maintenu de manière permanente et n'est pas modifié après la détection du patinage (d*) de la roue (150) à l'étape 4), en particulier jusqu'à ce qu'un signal de stabilisation (0) de la roue (150) ait été détecté, et est de préférence présent pendant une seconde durée définie (t2).

6. Procédé selon l'une des revendications précédentes,
**caractérisé en ce que**
le procédé présente au moins une étape supplémentaire parmi les étapes suivantes :
5) génération d'un cinquième signal (s5) pour une aire en dessous du troisième signal (s3) par l'unité de commande (200), en particulier à partir d'un moment auquel un patinage de la roue (150) a été détecté,
6a) génération d'un premier signal absolu (|s1|) pour une fonction valeur absolue du premier signal (s1)
6b) génération d'un deuxième signal absolu (|s2|) pour une fonction valeur absolue du deuxième signal (s2),
6c) génération d'un troisième signal absolu (|s3|) pour une fonction valeur absolue du troisième signal (s3), et/ou
6d) génération d'un quatrième signal absolu (|s4|) pour une fonction valeur absolue du quatrième signal (s4).

7. Procédé selon la revendication précédente,
**caractérisé en ce que**
le procédé présente au moins une étape supplémentaire parmi les étapes suivantes :
7a) surveillance du premier signal absolu (|s1|) en cas de non-atteinte d'une première valeur seuil absolue (c1),
7b) surveillance du deuxième signal absolu (|s2|) en cas de non-atteinte d'une deuxième valeur seuil absolue (c2),
7c) surveillance du troisième signal absolu (|s3|) en cas de non-atteinte d'une troisième valeur seuil absolue (c3),
7d) surveillance du quatrième signal absolu (|s4|) en cas de non-atteinte d'une quatrième valeur seuil absolue (c4),
7e) surveillance du cinquième signal (s5) en cas de non-atteinte d'une cinquième valeur seuil absolue (c5), et/ou
8) génération d'un signal de stabilisation (0),
si, dans toutes les étapes 7a) à 7d), en particulier pour une seconde durée définie (t2), la valeur seuil (c1, c2, c3, c4, c5) respective n'est pas dépassée par le signal absolu (|s1|, |s2|, |s3|, |s4|, s5) correspondant.

8. Procédé selon la revendication précédente,
**caractérisé en ce que**
le procédé présente au moins une étape supplémentaire parmi les étapes suivantes :
9) détermination, en particulier calcul, d'une force longitudinale maximale (Fmax) pouvant être transmise par la roue (150) sur une chaussée en fonction d'un couple d'entraînement de roue (Ma) et/ou d'un couple de freinage de roue (Mb) au moment auquel, à l'étape 4), le patinage (d*) ou un blocage de la roue (150) a été détecté ou après ledit moment, et/ou
10) détermination, en particulier calcul, d'un coefficient de frottement (µ) entre un pneumatique de la roue (150) et une chaussée.

9. Système d'aide pour un véhicule (100) comportant au moins une roue (150) pour l'entraînement du véhicule (100), dans lequel la roue (150) présente au moins un capteur de vitesse de rotation (110),
présentant une unité de commande (200), dans lequel l'unité de commande (200) est configurée pour détecter un patinage (d*) de la roue (150) conformément à un procédé selon l'une des revendications précédentes.
